# EUROPEAN PATENT SPECIFICATION

(11) **EP 1 926 278 B1**
(45) Date of publication and mention of the grant of the patent: **01.04.2009**
(21) Application number: 06124600.5
(22) Date of filing: 22.11.2006
(51) Int. Cl.: H04L 29/06

(54) **System and method for secure record protocol using shared knowledge of mobile user credentials**
System und Verfahren für ein sicheres Aufzeichnungsprotokoll unter Verwendung von gemeinsam genutzten Kenntnissen von Mobilteilnehmerberechtigungsnachweisen
Système et procédé de protocole d'enregistrement sécurisé utilisant les connaissances partagées des données d'utilisateurs de mobile

(43) Date of publication of application: 28.05.2008
(73) Proprietor: Research In Motion Limited, Waterloo, Ontario N2L 3W8 (CA)
(72) Inventor: Shenfield, Michael, Richmond Hill, Ontario L4C 3S9 (CA); Sherkin, Alexander, Newmarket, Ontario L3X 2J2 (CA)
(74) Representative: Rickard, David John

(56) References cited:
- EP-A- 1 569 382
- WO-A-01/13572
- US-A1- 2002 078 351
- US-B1- 6 233 341

## Description

The present disclosure relates generally to secure record protocols, and in particular to secure record protocols for communications between a client and a server.

Secure communications are important when sending many types of information between a client and server. For example, financial information, health information, electronic mail, among others need to be protected, both by ensuring data authenticity and integrity, and through encryption of the data.

Various solutions exist to provide such secure communications. One example involves the use of client and server certificates. However, as will be appreciated by those skilled in the art, it is difficult for a domain owner such as carrier or enterprise to manage client certificates on a client device, especially when the client device is a mobile device. Further, the installation of these client certificates on a mobile device involves challenging logistics.

Alternative solutions include the use of a shared secret where the shared secret or part of it flows over the air between a client and server prior to the establishment of the secured channel. As will be appreciated, this over the air transfer of shared secrets could result in data integrity being compromised.

US-A-2002/0078351 discloses a system in which client and server devices have key generators and messages are encrypted and decrypted by a symmetric algorithm using a secret key. The secret key may be known to both sender and recipient. The recipient is also sent a program which upon input of a password either uses the password as the secret key or uses the password to generate the secret key. The program then uses the key together with the encryption algorithm to decrypt the message.

WO 01/13572 A discloses a method for encrypting and decrypting data wherein key generators at the sending party and receiving party are used to derive the same key. EP-A-1 569 382 discloses two public/private key generators which produce different pairs of public/private keys. The public keys generated on each of the devices are exchanged out of band and used to generate a shared symmetric key by using Diffie-Hellman.

### GENERAL

The present system and method may provide a lightweight security model for the establishment of a secure, authenticated record protocol between a device client and a generic mobile server. The method may be based on shared knowledge of mobile user credentials such as a user password or any other secure parameters provided off-line at device or mobile user registration.

The system may involve a client key generator (CKG) that uses predefined security algorithms to generate public and private keys from an input token in a single key pair encryption methodology, or to generate device client public and private keys and a server public key from the input token in a dual key pairs solution. It should be noted that the server private key generated as a part of the sequence to produce the server public key is NOT exposed to the client runtime environment.

The system may further include a server key generator (SKG) that uses a matching security algorithm to that of the client key generator to generate a public and private key from the input token in a single key pair solution and a server public key, a server private key and a device client public key from the input token in an dual key pair solution. It should be noted that the client private key generated as a part of the sequence to produce the client public key is NOT exposed to the server runtime environment.

The present disclosure therefore may provide a method for secure record protocol in a system with a server having a server key generator and a client device having a client device key generator, comprising the steps of: utilizing a mobile user credential as an input to said server key generator and said client device key generator, said mobile user credential being known to both said server and said client device; utilizing said server key generator to generate one or two public key-private key pairs based on said mobile user credential input; utilizing said client device key generator to generate one or two public key-private key pairs based on said mobile user credential input; and sending a message signed with one of said private keys from the client device to the server or from the server to the client device, wherein said client device key generator and said server key generator are adapted to produce identical private key-public key pairs for an identical input.

The present disclosure may further provide a system for secure record protocol using a mobile user credential, comprising: a client, said client having: a communications subsystem; a processor adapted to communicate with said communications subsystem; a memory adapted to store an input created from said mobile user credential; a client key generator, said client key generator being provided with the input and adapted to generate one or two public key-private key pairs; and an signing/verification module, said signing/verification module adapted to sign a message with one of said private keys generated by said client key generator; and a server, said server having: a communications subsystem adapted to communicate with said client communications subsystem, said signed messages being sent from said client device to said server or from said server to said client device utilizing said communications subsystem of said client device and said communications subsystem of said server; a processor adapted to communicate with said communications subsystem; a memory adapted to store an input created from said mobile user credential; a server key generator, said server key generator being provided with the input and adapted to generate one or two public key-private key pairs; and an signing/verification module, said signing/verification module adapted to sign a message with one of said private keys generated by said server key generator, wherein said client key generator and said server key generator are adapted to produce identical private key-public key pairs for an identical input.

The invention also provides a computer readable medium storing code for use by a processor of a computing device or system to perform the method described above.

The invention also provides a communication system as described above in which a plurality of client devices are adapted to communicate with a server as described above,

### BRIEF DESCRIPTION OF THE DRAWINGS

The present disclosure will be better understood with reference to the drawings in which:
**Figure 1** is a block diagram of an exemplary device showing a single key pair solution utilizing a client key generator and a server key generator;
**Figure 2** is a block diagram of an exemplary device showing a dual key pair solution utilizing a client key generator and a server key generator;
**Figure 3** is a dataflow diagram of sample data flows between a client and server for the activation of a session;
**Figure 4** is a dataflow diagram of sample data flows between a client and server for the activation of a session; and
**Figure 5** is a block diagram of an exemplary mobile device.

### DESCRIPTION OF PREFERRED EMBODIMENTS

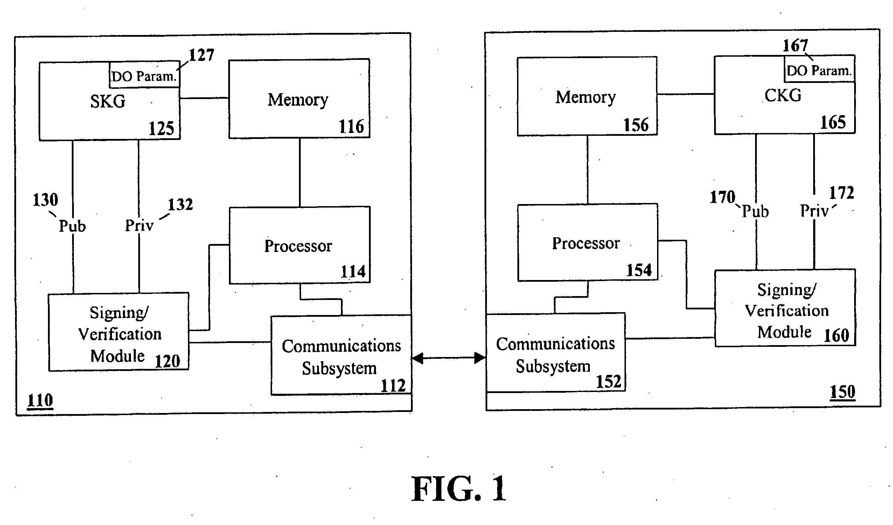

Reference is made to **Figure 1. Figure 1** illustrates a block diagram of a simplified server and client adapted to be used in a single key pair encryption scheme. The system includes a server **110** and a client **150.** Sever **110** includes a communications subsystem **112** adapted to communicate over a network with a client **150,** and in particular with a communications subsystem **152** on client **150.** As will be appreciated by those skilled in the art, the network over which communication occurs can be any network, included wired or wireless network. In one example, communications subsystem **152** is adapted to communicate through a wireless network such as a cellular network or a wireless local area network (WLAN) with a base station or an access point, which then connects through a series of system components such as a packet data serving node, through the internet to server **110.** Other examples of communications would be known to those skilled in the art and the present application is not meant to be limited to any particular mode of communications.

Server 110 further includes a processor 114 adapted to communicate with the communications subsystem 112.

Processor 114 also communicates with a memory 116 that is used to store various applications and data. Memory 116 could include any form of memory applied to computer systems and devices.

Processor 114 further communicates with a signing/verification module 120. In the system of Figure 1, signing/verification module 120 is a single key pair signing/verification module.

A server key generator 125 is adapted to provide signing/verification module 120 with the signing/verification key necessary to either sign an outgoing message or verify an incoming message. The server key generator (SKG) 125 is further adapted to communicate with memory 116 in order to receive an input token from memory 116.

The input token for SKG 125 comprises a mobile user credential that is known to both the server and the client. This could include credentials such as a user password or a secure code provided offline at device registration. Other examples of mobile user credentials would be known to those in the art.

SKG 125 utilizes input token from memory 116 to create both a public and a private key in a preferred embodiment. The private key is used for decrypting incoming messages and the public key is used for encrypting outgoing messages in the preferred embodiment.

SKG 125 further preferably includes domain owner parameters built into it. A wireless domain owner such as the carrier or the enterprise sets these domain owner parameters prior to deployment of SKG. SKG 125 combines the domain owner parameters 127 with the input token received from memory 116 in order to generate the public key 130 and the private key 132.

The combination of input token and domain owner parameters increases entropy and improves security. There are different ways of mixing these parameters. One is the generation of parameters from the domain owner parameters using, for example, DSA (Digital Signature Algorithm) keys. A DSA key generation mechanism can be found on the wikipedia web site under "Digital_Signature_Algorithm".

As described in the article above, (p, q, g, y) is a public key and (x) is a private key where:
p is order of a cyclic group Zp*
q is order of a cyclic subgroup Zq* of Zp* (q divides p)
g is a generator of cyclic subgroup Zq*
y is an element in Zq* such that g^{x} = y.

As will be appreciated, p, q, and g define algorithm parameters, and y is what defines public key.

Normally, p, q, and g are public. However, in the above, p, q, and g can be a secret algorithm parameters set derived from domain owner credentials. Then x (private key) will be derived from subscriber password, and y will be calculated as y = g^{x}. Note that p, q, and g should be the same on both sides.

In another example, a 2-phase process could be used within the CKG and SKG, where at the first phase the process applies a transformation to the input token using a key derived from domain owner parameters. Again, this key can be setup in CKGs securely prior to their deployment onto devices. Using this approach at the 1 st phase the process generates a new input key (with better entropy) and will feed this key to key pair generation in the second phase.

As will be appreciated by those in the art, other possible scenarios exist.

On the client side, client 150 includes a communication subsystem 152 as described above. Client 150 further includes a processor 154. Processor 154 is adapted to send communications over communication subsystem 152 and further interacts with a memory 156.

A signing/verification module 160 is utilized for signing outgoing messages and verifying incoming messages. Signing/verification module 160 communicates with a client key generator 165, which is adapted to create a key. In particular, in a preferred embodiment, a public key 170 and a private key 172 are generated. Public key 170 should be identical to public key 130 and private key 172 should be identical to private key 132.

In operation, an input token stored in memory 156 is input to the CKG 165. Preferably the domain owner parameters 167 are combined with the input token from memory 156 and client key generator 165 creates a key based on these two parameters. This could be done, as with the above, in a number of ways.

Also, one or both of SKG 125 and signing/verification module 120 could be part of processor 114. In the alternative, these components can be separate from processor 114 on server 110.

Similarly, CKG 165 could form part of processor 154 and signing/verification module 160 could also form part of processor 154. In the alternative, one or both the SKG 165 and signing/verification module 160 could be separate components on client device 150.

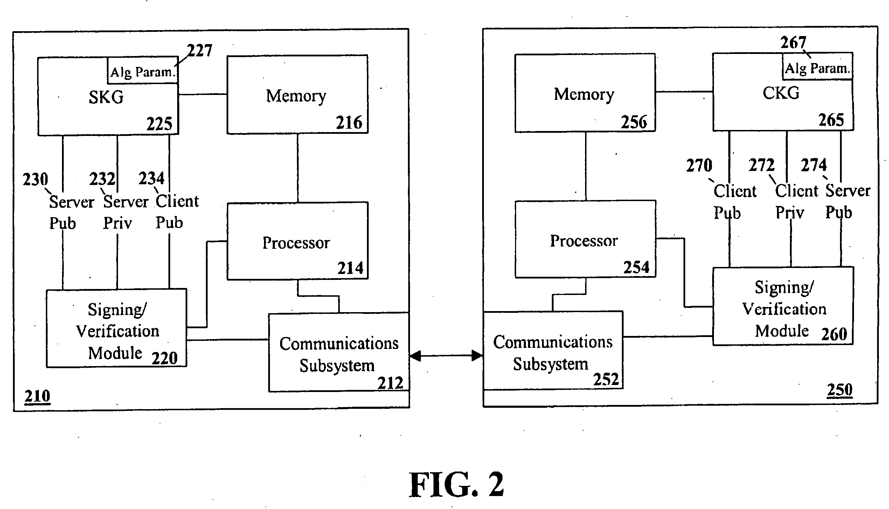

To provide better protection to the embodiment of Figure 1, a dual key pair system could be used. Reference is now made to Figure 2. Figure 2 illustrates an exemplary client/server system with a server 210 and a client 250.

As with the system of Figure 1, server 210 includes a communications subsystem 212 which is adapted to communicate over a network with client 250 and in particular with a communication subsystem 252 on client 250.

Server 210 further includes a processor 214 adapted to send and receive communications over communications subsystem 212 and further communicates with a memory 216 and a signing/verification module 220. Memory 216 stores an input token that comprises a shared credential, and memory 216 could be any form of memory.

In the system of Figure 2, signing/verification module 220 is an asymmetric signing/verification module. In other words, on server 210, the client private key is used to sign outgoing messages and a server public key is used to verify messages received from the client. As described below, the client public key could also be used for encryption, and the server private key used for verification.

A server key generator 225 is adapted to receive the input token from memory 216. Preferably, SKG 225 further includes algorithm parameters 227 which combine with the input token from memory 216 to the input for the server key generator 225.

SKG 225 produces a server public key 230, a server private key 232, a client public key 234 and a client private key (not shown). It is expected that the SKG 225 does not provide the ability to output the device client private key.

Similarly, client device 250 includes a communications subsystem 252 as described above. Further, client 250 includes a processor 254 adapted to send and receive communications over communications subsystem 252 and is adapted to communicate with memory 256. An asymmetric signing/verification module 260 communicates with the processor and communications subsystem 252 and further receives keys from a client key generator (CKG) 265.

CKG 265 receives a shared credential from memory 256 and in a preferred embodiment also uses algorithm parameters 267 to create an input token to generate keys. CKG 265 generates a client public key 270, a client private key 272, a server public key 274 and a server private key (not shown). It is expected that the CKG does not provide the ability to output the server private key.

The above system therefore involves a client key generator 265 that uses a predefined security algorithm to generate device client public and private keys 270 and 272 respectively and further a server public key 274 from the input token.
The above further involves a server key generator 225 that uses a matching security algorithm to generate a server public and private key 230 and 232 respectively, as well as a device client public key 234 based on the input token. When identical input tokens are used, the CKG 265 and the SKG 225 should satisfy the following conditions:
a) The server public key generated by CKG 265 should be identical to the server public key generated by SKG 225 and match the server private key 232 generated by SKG 225; and
b) The device client public key 234 generated by SKG 225 should be identical to client public key 270 generated by CKG 265 and match the client private key 272 generated by CKG 265.

The input parameters for algorithms used in SKG 225 and CKG 265 are confidential and managed by the domain owner. In a wireless domain, this could be the carrier or the enterprise. The SKG 225 and CKG 265 modules should offer a domain owner the ability to set up domain owner credentials prior to the deployment of these modules on servers 210 and devices 250. These domain owner credentials are a protected secret of the domain owner and provide additional security if client credentials are jeopardized. In one embodiment these parameters could be auto-generated using the domain owner private key.

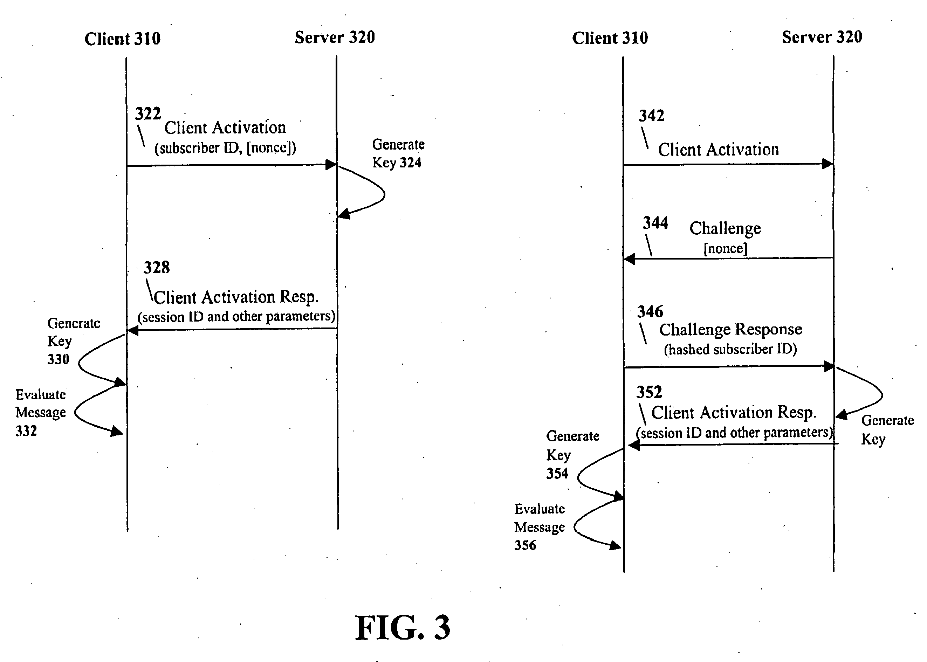

Reference is now made to Figure 3. Figure 3 shows a dataflow diagram in accordance with a preferred method. A client 310 communicates with a server 320. Client 310, upon version negotiation sends an activation message at step 322, the activation message providing a mobile user identity. A nonce could be provided with the activation message.

In an alternative flow, a client 310 could instead send a client activation message in step 342 and receive a challenge that may include a nonce in step 344. The client 310 would then send a challenge response 346 in which the mobile user identity is optionally hashed with the nonce from step 344.

Server 320 retrieves the mobile user identity from the message in 346 and uses the server key generator (SKG 225 from Figure 2) to generate a server private and public key pair as well as a client public key using the mobile user's password as an input token. Optionally, the input token for SKG 225 could be created using the password hashed with a secure hash functionwith a nonce if a client provided nonce in the activation message. In a further alternative, any password transformation using parameters shared by the client and server could be performed.

The server can then send an activation confirmation response message signed with the server private key in step 352.

In step 354, the client key generator generates a server public key and a client private public key pair using mobile user password as the input token. Optionally, the input token for the CKG could be created using the password hashed with a secure hash function with a nonce if a nonce was sent in the activation message, or any password transformation using parameters shared by both the client and the server.

The client 310 next verifies the message in step 356 with the server public key and optionally decrypts it with the client private key.

Subsequent messages between the client and the server use parts of their private/public keys for the record protocol to sign and encrypt messages.

With a more simple activation, the client activation message 322 includes the mobile user identifier and optionally a nonce.

In step 324, the server 320 gets the keys from the SKG based on the mobile user identifier. As indicated above, the server retrieves the mobile user password and uses the server key generator to generate a server private/public key pair and client/public key using the mobile user password as an input token. Optionally, the input token for SKG could be created using a password hashed with the nonce if the client provided a nonce in the activation message, or using any password transformation using parameters shared by both the client and the server.

The server 320 then sends a client activation message 328 that is signed with the server's private key and could also be encrypted with the client's public key if needed. The message in step 328 preferably includes the session identifier as well as any other parameters required by client 310.

Client 310 uses the client key generator to generate a server public key and a client public/private key pair using the mobile user password as an input token. Optionally, the input token for the CKG could be created using passwords hashed with the nonce if a nonce was sent in the activation message or any password transformation using secret parameters shared by the client and the server. This is performed in step 330.

In step 332 the client verifies the digital signature of the message with the server public key and optionally decrypts it with the client private key.

For any subsequent message, the client and server use their pairs of private/public keys for the record protocol to sign and encrypt messages.

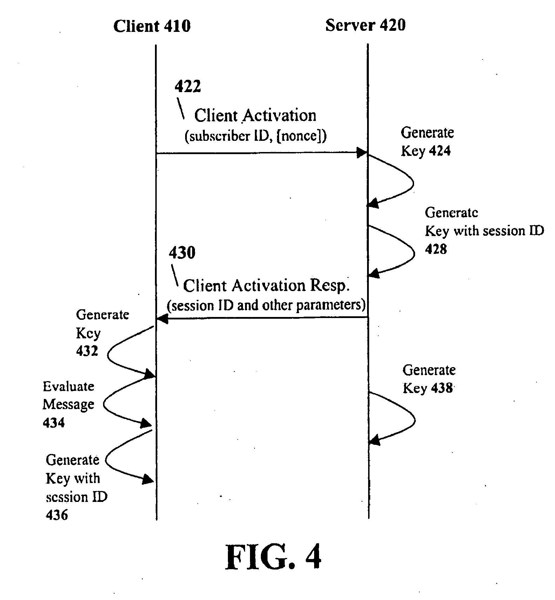

Reference is now made to Figure 4. Figure 4 shows an alternative data flow diagram.

Client 410 communicates with a server 420. As seen in Figure 4, various flows are possible for communications. Client 410 in a first flow creates a client's activation message at step 422, the message including a mobile user identifier and optionally a nonce.

In step 424, the server 420 receives the client activation message and the server retrieves the mobile user password and uses a server key generator to generate the private/public key pair and the client public key using the mobile user password as an input token. Optionally, the input token for the SKG could be created using a password hashed with a nonce if the client provided a nonce in the activation message, or with any password transformation using parameters shared by both the client and the server.

The server then generates a unique session identifier and creates a new shared secret based on a predefined combination of the mobile user password, nonce from the activation message if any, and optionally the generated session ID. This is performed in step 428.

Server 420 then sends a message in step 430 indicating activation confirmation and includes the generated session ID signed with the server private key.

The client in step 432 uses the client key generator to generate a server public key using the mobile user password and input token. Further, the client key generator could be used to generate a client public/private key pair. Again, optionally, the input token for the CKG could be created using a password hashed with a nonce if a nonce was sent in the activation message or any password transformation using parameters shared by the client and the server. If the message is encrypted, the client should use the CKG to generate a client private key to decrypt the message.

The process then verifies the message in step 434 with the server public key. The client optionally decrypts the message with the client private key, and retrieves the session ID.

In step 436, the client creates a shared secret identical to the server's shared secret based on the predefined combination of the mobile user password, nonce from the activation message, if any, and the generated session ID.

The client uses a CKG to generate a server public key and a client private public key pair based on the shared secret.

The server in step 438 uses the same information to generate a client public key and a server public private key pair based on the shared secret.

Next the client and the server use their pairs of public keys and private keys for the record protocol to sign and encrypt messages.

As will be appreciated by those skilled in the art, the benefit of the above approach is that the password-derived keys never travel over the air. The problem with keys traveling over the air is trusting the keys. Since keys are generated independently by each party, they will be trusted, so no certificates are required for public key verification.

As will further be appreciated by those skilled in the art, the above could be deployed on any client device. However, in one embodiment the above is deployed on wireless data devices. An enterprise or carrier can manage the CKG modules by provisioning the modules on to every device that is sold. The solution is therefore lightweight because it is easy to deploy. Further, because the modules are added to the device, nothing else needs to be done and the adding of the module can be done during device provisioning.

With reference to Figures 3 and 4, as will be appreciated by those skilled in the art, a single key pair could be used as an option for a simplified model in which a single key pair scheme is used.

The above further provides for non-repudiation constrained by CKG implementation security. The algorithm parameters are known only to one party since they are set by carrier or domain and combined with the password or other credential to create the public/private key pairs.

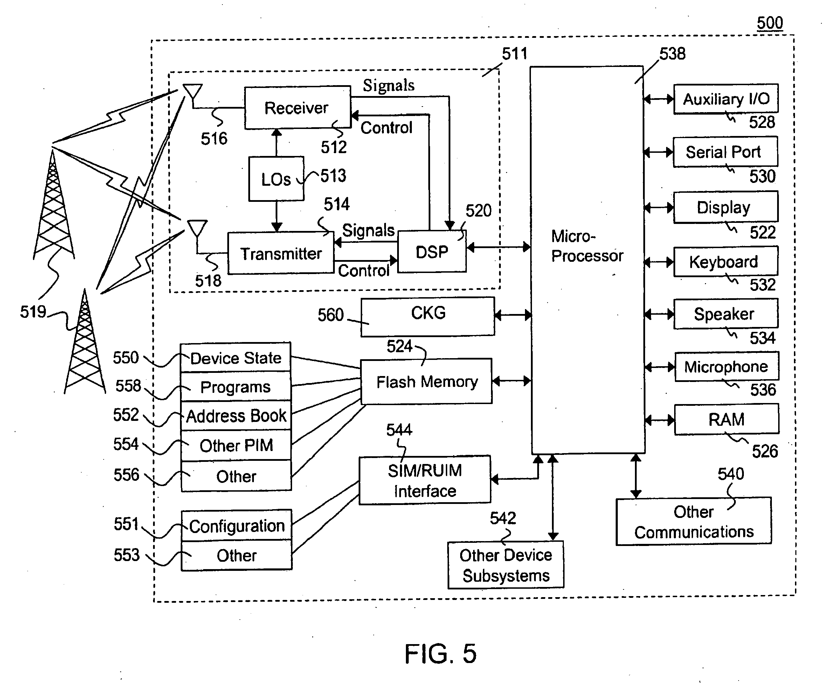

Reference is now made to Figure 5. Figure 5 shows a more detailed block diagram of an exemplary mobile device that can be used in association with the present method and system. The apparatus of Figure 5 is not meant to be limiting, and is meant only as an example of the type of device that can be used.

Figure 5 is a block diagram illustrating a mobile device apt to be used with preferred embodiments of the apparatus and method of the present application. Mobile device 500 is preferably a two-way wireless communication device having at least voice and data communication capabilities. Mobile device 500 preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile device 500 is enabled for two-way communication, it will incorporate a communication subsystem 511, including both a receiver 512 and a transmitter 514, as well as associated components such as one or more, preferably embedded or internal, antenna elements 516 and 518, local oscillators (LOs) 513, and a processing module such as a digital signal processor (DSP) 520. As will be apparent to those skilled in the field of communications, the particular design of the communication subsystem 511 will be dependent upon the communication network in which the device is intended to operate.

Network access requirements will also vary depending upon the type of network 519. In some CDMA networks, for example, network access is associated with a subscriber or user of mobile device 500. A CDMA mobile device may require a removable user identity module (RUIM) or a subscriber identity module (SIM) card in order to operate on a CDMA network. The SIM/RUIM interface 544 is normally similar to a card-slot into which a SIM/RUIM card can be inserted and ejected like a diskette or PCMCIA card. The SIM/RUIM card can have approximately 64K of memory and hold many key configuration 551, and other information 553 such as identification, and subscriber related information.

When required network registration or activation procedures have been completed, mobile device 500 may send and receive communication signals over the network 519. As illustrated in Figure 5, network 519 can consist of multiple base stations communicating with the mobile device. For example, in a hybrid CDMA 1x EVDO system, a CDMA base station and an EVDO base station communicate with the mobile device and the mobile device is connected to both simultaneously. The EVDO and CDMA 1x base stations use different paging slots to communicate with the mobile device.

Signals received by antenna 516 through communication network 519 are input to receiver 512, which may perform such common receiver functions as signal amplification, frequency down conversion, filtering, channel selection and the like, and in the example system shown in Figure 5, analog to digital (A/D) conversion. A/D conversion of a received signal allows more complex communication functions such as demodulation and decoding to be performed in the DSP 520. In a similar manner, signals to be transmitted are processed, including modulation and encoding for example, by DSP 520 and input to transmitter 514 for digital to analog conversion, frequency up conversion, filtering, amplification and transmission over the communication network 519 via antenna 518. DSP 520 not only processes communication signals, but also provides for receiver and transmitter control. For example, the gains applied to communication signals in receiver 512 and transmitter 514 may be adaptively controlled through automatic gain control algorithms implemented in DSP 520.

Mobile device 500 preferably includes a microprocessor 538 which controls the overall operation of the device. Communication functions, including at least data and voice communications, are performed through communication subsystem 511. Microprocessor 538 also interacts with further device subsystems such as the display 522, flash memory 524, random access memory (RAM) 526, auxiliary input/output (I/O) subsystems 528, serial port 530, one or more keyboards or keypads 532, speaker 534, microphone 536, other communication subsystem 540 such as a short-range communications subsystem and any other device subsystems generally designated as 542. Serial port 530 could include a USB port or other port known to those in the art.

Some of the subsystems shown in Figure 5 perform communication-related functions, whereas other subsystems may provide "resident" or on-device functions. Notably, some subsystems, such as keyboard 532 and display 522, for example, may be used for both communication-related functions, such as entering a text message for transmission over a communication network, and device-resident functions such as a calculator or task list.

Operating system software used by the microprocessor 538 is preferably stored in a persistent store such as flash memory 524, which may instead be a read-only memory (ROM) or similar storage element (not shown). Those skilled in the art will appreciate that the operating system, specific device applications, or parts thereof, may be temporarily loaded into a volatile memory such as RAM 526. Received communication signals may also be stored in RAM 526.

As shown, flash memory 524 can be segregated into different areas for both computer programs 558 and program data storage 550, 552, 554 and 556. These different storage types indicate that each program can allocate a portion of flash memory 524 for their own data storage requirements. Microprocessor 538, in addition to its operating system functions, preferably enables execution of software applications on the mobile device. A predetermined set of applications that control basic operations, including at least data and voice communication applications for example, will normally be installed on mobile device 500 during manufacturing. Other applications could be installed subsequently or dynamically.

A preferred software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application would preferably have the ability to send and receive data items, via the wireless network 519. In a preferred embodiment, the PIM data items are seamlessly integrated, synchronized and updated, via the wireless network 519, with the mobile device user's corresponding data items stored or associated with a host computer system. Further applications may also be loaded onto the mobile device 500 through the network 519, an auxiliary I/O subsystem 528, serial port 530, short-range communications subsystem 540 or any other suitable subsystem 542, and installed by a user in the RAM 526 or preferably a non-volatile store (not shown) for execution by the microprocessor 538. Such flexibility in application installation increases the functionality of the device and may provide enhanced on-device functions, communication-related functions, or both. For example, secure communication applications may enable electronic commerce functions and other such financial transactions to be performed using the mobile device 500.

In a data communication mode, a received signal such as a text message or web page download will be processed by the communication subsystem 511 and input to the microprocessor 538, which preferably further processes the received signal for output to the display 522, or alternatively to an auxiliary I/O device 528.

A client key generator 560, which could be equivalent to CKG 165 and CKG 265 keys to the microprocessor 538.

A user of mobile device 500 may also compose data items such as email messages for example, using the keyboard 532, which is preferably a complete alphanumeric keyboard or telephone-type keypad, in conjunction with the display 522 and possibly an auxiliary I/O device 528. Such composed items may then be transmitted over a communication network through the communication subsystem 511.

For voice communications, overall operation of mobile device 500 is similar, except that received signals would preferably be output to a speaker 534 and signals for transmission would be generated by a microphone 536. Alternative voice or audio I/O subsystems, such as a voice message recording subsystem, may also be implemented on mobile device 500. Although voice or audio signal output is preferably accomplished primarily through the speaker 534, display 522 may also be used to provide an indication of the identity of a calling party, the duration of a voice call, or other voice call related information for example.

Serial port 530 in Figure 5, would normally be implemented in a personal digital assistant (PDA)-type mobile device for which synchronization with a user's desktop computer (not shown) may be desirable, but is an optional device component. Such a port 530 would enable a user to set preferences through an external device or software application and would extend the capabilities of mobile device 500 by providing for information or software downloads to mobile device 500 other than through a wireless communication network. The alternate download path may for example be used to load an encryption key onto the device through a direct and thus reliable and trusted connection to thereby enable secure device communication. As will be appreciated by those skilled in the art, serial port 530 can further be used to connect the mobile device to a computer to act as a modem.

Other communications subsystems 540, such as a short-range communications subsystem, is a further optional component which may provide for communication between mobile device 500 and different systems or devices, which need not necessarily be similar devices. For example, the subsystem 540 may include an infrared device and associated circuits and components or a Bluetooth™ communication module to provide for communication with similarly enabled systems and devices.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method for secure record protocol in a system with a server (110; 210) having a server key generator (125; 225) and a client device (150; 250) having a client device key generator (165; 265), comprising the steps of:
utilizing a mobile user credential as an input to said server key generator (125;225) and said client device key generator (165; 265), said mobile user credential being known to both said server (110; 210) and said client device (150; 250);
utilizing said server key generator (125; 225) to generate one or two public key-private key pairs based on said mobile user credential input;
utilizing said client device key generator (165;265) to generate one or two public key-private key pairs based on said mobile user credential input; and
sending a message signed with one of said private keys from the client device to the server or from the server to the client device,
wherein said client device key generator and said server key generator are adapted to produce identical private key-public key pairs for an identical input.

2. The method of claim 1, wherein the mobile user credential is a password.

3. The method of claim 1 or claim 2, wherein the input is a password hashed, using a secure hash function, with a nonce.

4. The method of any one of claims 1 to 3, wherein the input is a password transformation using a parameter shared by the client device and the server.

5. The method of any one of claims 1 to 4, wherein said server key generator (125; 225) and said client device key generator (165; 265) generate only one public key-private key pair.

6. The method of any one of claims 1 to 4, wherein said server key generator (125; 225) and said client device key generator (165; 265) generate a client device public key-private key pair and a server public-key private key pair.

7. The method of claim 6, wherein said server key generator (125; 225) and said client device key generator (165; 265) hide the client device private key or the server private key.

8. The method of any one of claims 1 to 7 wherein the sending step further encrypts the message with one of said public keys.

9. The method of any one of claims 1 to 8, wherein utilizing identical inputs, said generating step, when performed on said client device (150; 250), generates identical public-private key pairs to said generating step, when performed on said server (110;210).

10. The method of any one of claims 1 to 9, wherein said utilizing step further incorporates a session identifier to create an input.

11. The method of anyone of claims 1 to 10, wherein said generating step further comprises parameters provided by a domain owner.

12. The method of claim 11, wherein the parameters provided by the domain owner are auto-generated using a private key of the domain owner.

13. The method of any one of claims 1 to 12, wherein said client device is a wireless device.

14. A system for secure record protocol using a mobile user credential, comprising:
a client device (150; 250), said client device having:
a communications subsystem (152;252);
a processor (154; 254) adapted to communicate with said communications subsystem (152; 252);
a memory (156; 256) adapted to store an input created from said mobile user credential;
a client device key generator (165; 265), said client device key generator being provided with the input and adapted to generate one or two public key-private key pairs; and
a signing/verification module (160;260), said signing/verification module adapted to sign a message with one of said private keys generated by said client device key generator(165; 265); and
a server (110; 210), said server having:
a communications subsystem (112; 212) adapted to communicate with said client device communications subsystem (152; 252), said signed messages being sent from said client device to said server or from said server to said client device utilizing said communications subsystem of said client device and said communications subsystem of said server;
a processor (114;214) adapted to communicate with said server communications subsystem;
a memory (116; 216) adapted to store an input created from said mobile user credential;
a server key generator (125; 225), said server key generator being provided with the input and adapted to generate one or two public key-private key pairs; and
a signing/verification module (120; 220), said signing/verification module adapted to sign a message with one of said private keys generated by said server key generator,
wherein said client device key generator and said server key generator are adapted to produce identical private key-public key pairs for an identical input.

15. The system of claim 14, wherein the mobile user credential comprises a password

16. The system of claim 14 or claim 15, wherein the input at the server and the input at the client device comprises a password hashed with a nonce.

17. The system of any one of claims 14 to 16, wherein the input at the server and the input at the client device comprises a password transformation using a parameter shared by the client device and the server.

18. The system of any one of claims 14 to 16, wherein the client device key generator (165; 265) and server key generator (125; 225) are adapted to generate an identical single public key-private key pair.

19. The system of any one of claims 14 to 17, wherein the client device key generator (165; 265) and server key generator (125; 225) are adapted to generate both a client public key-private key pair and a server public-key private key pair.

20. The system of claim 19, wherein said client device key generator (165; 265) hides the server private key and said server key generator (125; 225) hides said client device private key.

21. The system of any one of claims 14 to 20 wherein the client device signing/verification module further encrypts the message with one of said public keys.

22. The system of any one of claims 14 to 21 wherein the server signing/verification module further encrypts the message with one of said public keys.

23. The system of any one of claims 14 to 22, wherein said input comprises a session identifier.

24. The system of any one of claims 14 to 23, wherein client device key generator (165; 265) and said server key generator (125; 225) are adapted to utilize parameters provided by a domain owner in combination with the input.

25. The system of claim 24, wherein the parameters provided by the domain owner are auto-generated using a private key of the domain owner.

26. The system of any one of claims 14 to 25, wherein said client device is a wireless device.

27. A computer readable medium storing program code for use by a processor of a computing device or system to cause said computing device or system to perform the method of any one of claims 1 to 13.

28. The system of any one of claims 14 to 26 in which a plurality of client devices are adapted to communicate with the server.

## Patentansprüche

1. Verfahren für ein sicheres Aufzeichnungsprotokoll in einem System mit einem Server (110; 210), der einen Server-Schlüsselgenerator (125; 225) hat, und mit einem Client-Gerät (150; 250), das einen Client-Gerät-Schlüsselgenerator (165; 265) hat; das Verfahren umfassend die folgenden Schritte:
das Benutzen eines Mobilteilnehmerberechtigungsnachweises als eine Eingabe für den Server-Schlüsselgenerator (125; 225) und den Client-Gerät-Schlüsselgenerator (165; 265), wobei der Mobilteilnehmerberechtigungsnachweis sowohl dem Server (110; 210) als auch dem Client-Gerät (150; 250) bekannt ist;
das Benutzen des Server-Schlüsselgenerators (125; 225) zum Erzeugen von einem oder zwei Paaren aus öffentlichem Schlüssel und privatem Schlüssel auf der Basis der Mobilteilnehmerberechtigungsnachweiseingabe;
das Benutzen des Client-Gerät-Schlüsselgenerators (165; 265) zum Erzeugen von einem oder zwei Paaren aus öffentlichem Schlüssel und privatem Schlüssel auf der Basis der Mobilteilnehmerberechtigungsnachweiseingabe; und
das Senden einer Nachricht, die mit einem der privaten Schlüssel signiert ist, von dem Client-Gerät zu dem Server oder von dem Server zu dem Client-Gerät,
wobei der Client-Gerät-Schlüsselgenerator und der Server-Schlüsselgenerator dazu eingerichtet sind, für eine identische Eingabe identische Paare aus privatem Schlüssel und öffentlichem Schlüssel zu erzeugen.

2. Verfahren gemäß Anspruch 1, wobei der Mobilteilnehmerberechtigungsnachweis ein Passwort ist.

3. Verfahren gemäß Anspruch 1 oder Anspruch 2, wobei die Eingabe ein Passwort ist, das unter Verwendung einer sicheren Hash-Funktion mit einer Nonce gehasht wurde.

4. Verfahren gemäß einem der Ansprüche 1 bis 3, wobei die Eingabe eine Passworttransformation unter Verwendung eines durch das Client-Gerät und den Server gemeinsam genutzten Parameters ist.

5. Verfahren gemäß einem der Ansprüche 1 bis 4, wobei der Server-Schlüsselgenerator (125; 225) und der Client-Gerät-Schlüsselgenerator (165; 265) nur ein Paar aus öffentlichem Schlüssel und privatem Schlüssel erzeugen.

6. Verfahren gemäß einem der Ansprüche 1 bis 4, wobei der Server-Schlüsselgenerator (125; 225) und der Client-Gerät-Schlüsselgenerator (165; 265) ein Client-Gerät-Paar aus öffentlichem Schlüssel und privatem Schlüssel und ein Server-Paar aus öffentlichem Schlüssel und privatem Schlüssel erzeugen.

7. Verfahren gemäß Anspruch 6, wobei der Server-Schlüsselgenerator (125; 225) und der Client-Gerät-Schlüsselgenerator (165; 265) den privaten Client-Gerät-Schlüssel oder den privaten Server-Schlüssel verbergen.

8. Verfahren gemäß einem der Ansprüche 1 bis 7, wobei beim Schritt des Sendens des Weiteren die Nachricht mit einem der öffentlichen Schlüssel verschlüsselt wird.

9. Verfahren gemäß einem der Ansprüche 1 bis 8, wobei die Benutzung identischer Eingaben beim Schritt des Erzeugens, wenn dieser auf dem Client-Gerät (150; 250) durchgeführt wird, zur Erzeugung identischer Paare aus öffentlichem und privatem Schlüssel führt wie beim Schritt des Erzeugens, wenn dieser auf dem Server (110; 210) durchgeführt wird.

10. Verfahren gemäß einem der Ansprüche 1 bis 9, wobei beim Schritt des Benutzens des Weiteren eine Sitzungskennung zum Erstellen einer Eingabe einbezogen wird.

11. Verfahren gemäß einem der Ansprüche 1 bis 10, wobei der Schritt des Erzeugens des Weiteren Parameter umfasst, die durch einen Domänenbesitzer bereitgestellt werden.

12. Verfahren gemäß Anspruch 11, wobei die durch den Domänenbesitzer bereitgestellten Parameter unter Verwendung eines privaten Schlüssels des Domänenbesitzers automatisch erzeugt werden.

13. Verfahren gemäß einem der Ansprüche 1 bis 12, wobei das Client-Gerät ein Drahtlosgerät ist.

14. System für ein sicheres Aufzeichnungsprotokoll unter Verwendung eines Mobilteilnehmerberechtigungsnachweises, das System umfassend:
ein Client-Gerät (150; 250), wobei das Client-Gerät verfügt über:
ein Kommunikationssubsystem (152; 252);
einen Prozessor (154; 254), der zur Kommunikation mit dem Kommunikationssubsystem (152; 252) eingerichtet ist;
einen Speicher (156; 256), der zum Speichern einer Eingabe eingerichtet ist, die aus dem Mobilteilnehmerberechtigungsnachweis erzeugt wird;
einen Client-Gerät-Schlüsselgenerator (165; 265), wobei dem Client-Gerät-Schlüsselgenerator die Eingabe bereitgestellt wird und er dazu eingerichtet ist, ein oder zwei Paare aus öffentlichem Schlüssel und privatem Schlüssel zu erzeugen; und
ein Signierungs- und Verifizierungsmodul (160; 260), wobei das Signierungs- und Verifizierungsmodul dazu eingerichtet ist, eine Nachricht mit einem der privaten Schlüssel zu signieren, die durch den Client-Gerät-Schlüsselgenerator (165; 265) erzeugt werden; und
einen Server (110; 210), wobei der Server verfügt über:
ein Kommunikationssubsystem (112; 212), das zur Kommunikation mit dem Client-Gerät-Kommunikationssubsystem (152; 252) eingerichtet ist, wobei die signierten Nachrichten von dem Client-Gerät an den Server oder von dem Server an das Client-Gerät unter Benutzung des Kommunikationssubsystems des Client-Geräts und des Kommunikationssubsystems des Servers gesendet werden;
einen Prozessor (114; 214), der zur Kommunikation mit dem Server-Kommunikationssubsystem eingerichtet ist;
einen Speicher (116; 216), der zum Speichern einer Eingabe eingerichtet ist, die aus dem Mobilteilnehmerberechtigungsnachweis erzeugt wird;
einen Server-Schlüsselgenerator (125; 225), wobei dem Server-Schlüsselgenerator die Eingabe bereitgestellt wird und er dazu eingerichtet ist, ein oder zwei Paare aus öffentlichem Schlüssel und privatem Schlüssel zu erzeugen; und
ein Signierungs- und Verifizierungsmodul (120; 220), wobei das Signierungs- und Verifizierungsmodul dazu eingerichtet ist, eine Nachricht mit einem der privaten Schlüssel zu signieren, die durch den Server-Schlüsselgenerator erzeugt werden,
wobei der Client-Gerät-Schlüsselgenerator und der Server-Schlüsselgenerator dazu eingerichtet sind, für eine identische Eingabe identische Paare aus privatem Schlüssel und öffentlichem Schlüssel zu erzeugen.

15. System gemäß Anspruch 14, wobei der Mobilteilnehmerberechtigungsnachweis ein Passwort umfasst.

16. System gemäß Anspruch 14 oder Anspruch 15, wobei die Eingabe an dem Server und die Eingabe an dem Client-Gerät ein Passwort umfasst, das mit einer Nonce gehasht wurde,

17. System gemäß einem der Ansprüche 14 bis 16, wobei die Eingabe an dem Server und die Eingabe an dem Client-Gerät eine Passworttransformation unter Verwendung eines durch das Client-Gerät und den Server gemeinsam genutzten Parameters umfasst.

18. System gemäß einem der Ansprüche 14 bis 16, wobei der Client-Gerät-Schlüsselgenerator (165; 265) und der Server-Schlüsselgenerator (125; 225) dazu eingerichtet sind, ein identisches einziges Paar aus öffentlichem Schlüssel und privatem Schlüssel zu erzeugen.

19. System gemäß einem der Ansprüche 14 bis 17, wobei der Client-Gerät-Schlüsselgenerator (165; 265) und der Server-Schlüsselgenerator (125; 225) dazu eingerichtet sind, sowohl ein Client-Paar aus öffentlichem Schlüssel und privatem Schlüssel als auch ein Server-Paar aus öffentlichem Schlüssel und privatem Schlüssel zu erzeugen.

20. System gemäß Anspruch 19, wobei der Client-Gerät-Schlüsselgenerator (165; 265) den privaten Server-Schlüssel verbirgt und der Server-Schlüsselgenerator (125; 225) den privaten Client-Gerät-Schlüssel verbirgt.

21. System gemäß einem der Ansprüche 14 bis 20, wobei das Signierungs- und Verifizierungsmodul des Client-Geräts des Weiteren die Nachricht mit einem der öffentlichen Schlüssel verschlüsselt.

22. System gemäß einem der Ansprüche 14 bis 21, wobei das Signierungs- und Verifizierungsmodul des Servers des Weiteren die Nachricht mit einem der öffentlichen Schlüssel verschlüsselt.

23. System gemäß einem der Ansprüche 14 bis 22, wobei die Eingabe eine Sitzungskennung umfasst.

24. System gemäß einem der Ansprüche 14 bis 23, wobei der Client-Gerät-Schlüsselgenerator (165; 265) und der Server-Schlüsselgenerator (125; 225) dazu eingerichtet sind, in Kombination mit der Eingabe Parameter zu benutzen, die durch einen Domänenbesitzer bereitgestellt werden.

25. System gemäß Anspruch 24, wobei die durch den Domänenbesitzer bereitgestellten Parameter unter Verwendung eines privaten Schlüssels des Domänenbesitzers automatisch erzeugt werden.

26. System gemäß einem der Ansprüche 14 bis 25, wobei das Client-Gerät ein Drahtlosgerät ist.

27. Computerlesbares Medium zum Speichern von Programmcode zur Verwendung durch einen Prozessor eines Computergeräts oder -systems, um zu bewirken, dass das Computergerät oder -system das Verfahren gemäß einem der Ansprüche 1 bis 13 durchführt.

28. System gemäß einem der Ansprüche 14 bis 26, bei dem eine Mehrzahl von Client-Geräten dazu eingerichtet sind, mit dem Server zu kommunizieren.

## Revendications

1. Un procédé pour un protocole d'enregistrement sécurisé dans un système avec un serveur (110 ; 210) ayant un générateur de clés de serveur (125 ; 225) et un dispositif client (150 ; 250) ayant un générateur de clés de dispositif client (165 ; 265), comportant les étapes suivantes :
utiliser un authentifiant d'utilisateur de mobile comme entrée dans ledit générateur de clés de serveur (125 ; 225) et ledit générateur de clés de dispositif client (165 ; 265), ledit authentifiant d'utilisateur de mobile étant connu à la fois dudit serveur (110 ; 210) et dudit dispositif client (150 ; 250) ;
utiliser ledit générateur de clés de serveur (125 ; 225) pour générer une ou deux paire(s) clé publique-clé privée sur la base de ladite entrée d'authentifiant d'utilisateur de mobile ;
utiliser ledit générateur de clés de dispositif client (165 ; 265) pour générer une ou deux paire(s) clé publique-clé privée sur la base de ladite entrée d'authentifiant d'utilisateur de mobile ; et
envoyer un message signé avec l'une desdites clés privées du dispositif client au serveur ou du serveur au dispositif client,
dans lequel ledit générateur de clés de dispositif client et ledit générateur de clés de serveur sont adaptés pour produire des paires clé privée-clé publique identiques pour une entrée identique.

2. Le procédé de la revendication 1, dans lequel l'authentifiant d'utilisateur de mobile est un mot de passe.

3. Le procédé de la revendication 1 ou de la revendication 2, dans lequel l'entrée est un mot de passe haché, à l'aide d'une fonction de hachage sécurisée, avec un nonce.

4. Le procédé de n'importe laquelle des revendications 1 à 3, dans lequel l'entrée est une transformation de mot de passe à l'aide d'un paramètre partagé par le dispositif client et le serveur.

5. Le procédé de n'importe laquelle des revendications 1 à 4, dans lequel ledit générateur de clés de serveur (125 ; 225) et ledit générateur de clés de dispositif client (165 ; 265) génèrent seulement une paire clé publique-clé privée.

6. Le procédé de n'importe laquelle des revendications 1 à 4, dans lequel ledit générateur de clés de serveur (125 ; 225) et ledit générateur de clés de dispositif client (165 ; 265) génèrent une paire clé publique-clé privée de dispositif client et une paire clé publique-clé privée de serveur.

7. Le procédé de la revendication 6, dans lequel ledit générateur de clés de serveur (125 ; 225) et ledit générateur de clés de dispositif client (165 ; 265) cachent la clé privée de dispositif client ou la clé privée de serveur.

8. Le procédé de n'importe laquelle des revendications 1 à 7, dans lequel l'étape d'envoi chiffre plus avant le message avec l'une desdites clés publiques.

9. Le procédé de n'importe laquelle des revendications 1 à 8, dans lequel en utilisant des entrées identiques, ladite étape de génération, lorsque réalisée sur ledit dispositif client (150 ; 250), génère des paires de clés publique-privée identiques à ladite étape de génération, lorsque réalisée sur ledit serveur (110 ; 210).

10. Le procédé de n'importe laquelle des revendications 1 à 9, dans lequel ladite étape d'utilisation intègre de plus un identifiant de session pour créer une entrée.

11. Le procédé de n'importe laquelle des revendications 1 à 10, dans lequel ladite étape de génération comporte de plus des paramètres fournis par un propriétaire de domaine.

12. Le procédé de la revendication 11, dans lequel les paramètres fournis par le propriétaire de domaine sont autogénérés à l'aide d'une clé privée du propriétaire de domaine.

13. Le procédé de n'importe laquelle des revendications 1 à 12, dans lequel ledit dispositif client est un dispositif sans fil.

14. Un système pour un protocole d'enregistrement sécurisé utilisant un authentifiant d'utilisateur de mobile, comportant :
un dispositif client (150 ; 250), ledit dispositif client ayant :
un sous-système de communication (152 ; 252) ;
un processeur (154 ; 254) adapté pour communiquer avec ledit sous-système de communication (152 ; 252) ;
une mémoire (156 ; 256) adaptée pour stocker une entrée créée à partir dudit authentifiant d'utilisateur de mobile ;
un générateur de clés de dispositif client (165 ; 265), ledit générateur de clés de dispositif client étant muni de l'entrée et adapté pour générer une ou deux paire(s) clé publique-clé privée ; et
un module de signature/vérification (160 ; 260), ledit module de signature/vérification étant adapté pour signer un message avec l'une desdites clés privées générées par ledit générateur de clés de dispositif client (165 ; 265) ; et
un serveur (110 ; 210), ledit serveur ayant :
un sous-système de communication (112 ; 212) adapté pour communiquer avec ledit sous-système de communication de dispositif client (152 ; 252), lesdits messages signés étant envoyés dudit dispositif client audit serveur ou dudit serveur audit dispositif client en utilisant ledit sous-système de communication dudit dispositif client et ledit sous-système de communication dudit serveur ;
un processeur (114 ; 214) adapté pour communiquer avec ledit sous-système de communication de serveur ;
une mémoire (116 ; 216) adaptée pour stocker une entrée créée à partir dudit authentifiant d'utilisateur de mobile ;
un générateur de clés de serveur (125 ; 225), ledit générateur de clés de serveur étant muni de l'entrée et adapté pour générer une ou deux paire(s) clé publique-clé privée ; et
un module de signature/vérification (120 ; 220), ledit module de signature/vérification étant adapté pour signer un message avec l'une desdites clés privées générées par ledit générateur de clés de serveur,
dans lequel ledit générateur de clés de dispositif client et ledit générateur de clés de serveur sont adaptés pour produire des paires clé privée-clé publique identiques pour une entrée identique.

15. Le système de la revendication 14, dans lequel l'authentifiant d'utilisateur de mobile comporte un mot de passe.

16. Le système de la revendication 14 ou de la revendication 15, dans lequel l'entrée au niveau du serveur et l'entrée au niveau du dispositif client comportent un mot de passe haché avec un nonce.

17. Le système de n'importe laquelle des revendications 14 à 16, dans lequel l'entrée au niveau du serveur et l'entrée au niveau du dispositif client comportent une transformation de mot de passe à l'aide d'un paramètre partagé par le dispositif client et le serveur.

18. Le système de n'importe laquelle des revendications 14 à 16, dans lequel le générateur de clés de dispositif client (165 ; 265) et le générateur de clés de serveur (125 ; 225) sont adaptés pour générer une paire clé publique-clé privée unique identique.

19. Le système de n'importe laquelle des revendications 14 à 17, dans lequel le générateur de clés de dispositif client (165 ; 265) et le générateur de clés de serveur (125 ; 225) sont adaptés pour générer à la fois une paire clé publique-clé privée de client et une paire clé publique-clé privée de serveur.

20. Le système de la revendication 19, dans lequel ledit générateur de clés de dispositif client (165 ; 265) cache la clé privée de serveur et ledit générateur de clés de serveur (125 ; 225) cache ladite clé privée de dispositif client.

21. Le système de n'importe laquelle des revendications 14 à 20, dans lequel le module de signature/vérification de dispositif client chiffre plus avant le message avec l'une desdites clés publiques.

22. Le système de n'importe laquelle des revendications 14 à 21, dans lequel le module de signature/vérification de serveur chiffre plus avant le message avec l'une desdites clés publiques.

23. Le système de n'importe laquelle des revendications 14 à 22, dans lequel ladite entrée comporte un identifiant de session.

24. Le système de n'importe laquelle des revendications 14 à 23, dans lequel le générateur de clés de dispositif client (165 ; 265) et ledit générateur de clés de serveur (125 ; 225) sont adaptés pour utiliser des paramètres fournis par un propriétaire de domaine en combinaison avec l'entrée.

25. Le système de la revendication 24, dans lequel les paramètres fournis par le propriétaire de domaine sont autogénérés à l'aide d'une clé privée du propriétaire de domaine.

26. Le système de n'importe laquelle des revendications 14 à 25, dans lequel ledit dispositif client est un dispositif sans fil.

27. Un support lisible par ordinateur stockant du code de programme pour une utilisation par un processeur d'un dispositif ou système informatique afin d'amener ledit dispositif ou système informatique à réaliser le procédé de n'importe laquelle des revendications 1 à 13.

28. Le système de n'importe laquelle des revendications 14 à 26, dans lequel une pluralité de dispositifs clients sont adaptés pour communiquer avec le serveur.
